(19) Europäisches Patentamt
European Patent Office
Office européen des brevets

(11) **EP 2 571 198 A1**

(12) **EUROPEAN PATENT APPLICATION**

(43) Date of publication:
**20.03.2013 Bulletin 2013/12**

(51) Int Cl.:
***H04L 12/26*** *(2006.01)*

(21) Application number: **12176148.0**

(22) Date of filing: **12.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.09.2011 JP 2011203565**

(71) Applicant: **Hitachi Ltd.
Tokyo 100-8280 (JP)**

(72) Inventors:
• **Yunoki, Shoji
Tokyo, 100-8220 (JP)**
• **Takada, May
Tokyo, 100-8220 (JP)**
• **Tamaki, Satoshi
Tokyo, 100-8220 (JP)**
• **Konno, Tsutomu
Tokyo, 100-8220 (JP)**
• **Iwakaki, Takehito
Tokyo, 100-8220 (JP)**

(74) Representative: **MERH-IP
Matias Erny Reichl Hoffmann
Paul-Heyse-Strasse 29
80336 München (DE)**

(54) **Remote monitoring system, network interconnection device and communication control method**

(57)     Even though a network with communication rate large fluctuations is applied to a remote monitoring system, data communication delay time is kept smaller for which a shorter communication delay time is demanded and a high throughput is implemented. A sensor equipped terminal sends measurement data to a network interconnection device 150; 800; 900; 1000. A priority level determining unit 212 of the device sorts the data into first data necessary to be delivered to a monitoring center 170 within requested communication delay time and second data not necessarily to be delivered to the center within requested communication delay time. A transmission buffer unit 242 is a buffer storing the first and second data accumulated in first and second data accumulating units 220, 221 in sending the data to a wide area network 120 by FIFO. A transmission control unit 233 dynamically controls a rate in causing the data to come in the transmission buffer unit 242 based on a network communication rate.

FIG. 2

EP 2 571 198 A1

**Description**

FIELD OF THE INVENTION

The present invention relates to a remote monitoring system, a network interconnection device, and a communication control method, and more particularly to a remote monitoring system, a network interconnection device, and a communication control method that are applicable to a network such as a wireless network with abrupt fluctuations in the communication rate.

BACKGROUND OF THE INVENTION

Such movement is increasing in which the monitoring and maintenance of the facilities of plants such as electric power plants and industrial plants and the monitoring or the like of energy consumption are automatically and remotely conducted using a sensor network. In most cases, conventionally, a monitoring center that analyzes collected measurement data is located on the local area network of a monitor subject. However, in these years, because of an increase in the number of communication terminals that collect the data of a monitor subject and an increase in information volumes collected by communication terminals, there are increasing cases where information is separated and accommodated in a plurality of local area networks (information is separated into areas) because it is difficult to accommodate information at a single local area network. Moreover, such a demand is also increasing that it is desired to monitor a plurality of different monitor subjects at a single monitoring center in a centralized manner. Thus, such a form is spreading that information collected at a plurality of local area networks is put together at a single monitoring center via a wide area network.

In some cases, private lines are used to reserve a sufficient communication rate in the wide area network. However, from a viewpoint of communication costs, it can be considered that such cases will be increased in future where it is difficult to reserve a sufficient communication rate because common communication resources are shared with other systems and other terminals via intranets, the Internet, or the like. Since the monitoring center is necessary to detect troubles or the like in facilities as fast as possible, it is necessary to always deliver measurement data expressing troubles or the like in facilities to the monitoring center within a certain time period regardless of the communication rate of the wide area network. On the other hand, among items of measurement data, data such as measurement data expressing the states of normally operating devices, for example, is not always delivered to the monitoring center within a certain time period. In such a network interconnection device that connects two networks, in the case where the inlet rate of data coming from a first network to the network interconnection device (in the following, referred to as a data inlet rate) exceeds the communication rate of a second network at which the network interconnection device sends the data (in the following, referred to as a communication rate), the data is lost in the network interconnection device. In order to prevent this data loss, the network interconnection device is provided with a buffer to temporarily accumulate incoming data. For example, since a communication rate abruptly fluctuates in the case where a wireless network is used for the second network, a buffer with a large capacity is used.

For a method for controlling the quality of communications via two networks, various priority level control methods in the network interconnection device are proposed. In Japanese Unexamined Patent Application Publication No. 2005-117125, for example, a priority level control technique according to the bandwidth of a network is disclosed. In Japanese Unexamined Patent Application Publication No. Hei7 (1995)-58775, for example, a technique is disclosed in which the use amount of a buffer is controlled according to the loss rate of data in the buffer.

SUMMARY OF THE INVENTION

In the buffer in the network interconnection device, data is accumulated at a differential rate between a data inlet rate and a communication rate. The communication delay time of data is proportional to a data volume accumulated in a transmission buffer. Thus, when the capacity of the buffer is made smaller, communication delay time is also made smaller. For example, time to send data from the first data to the backend data in the transmission buffer is made smaller. However, in the case where the capacity of the buffer is small, such situations occur that it is difficult to send data because there is no data accumulated in the buffer although a communication rate is high. Thus, the average data volume that can be sent by the network interconnection device per unit time (in the following, referred to as throughput) is reduced, as the capacity of the buffer is smaller. As described above, communication delay time and throughput make a tradeoff according to the capacity of the buffer.

In the technique described in Japanese Unexamined Patent Application Publication No. 2005-117125, the rate at which packets are read out of a memory is controlled according to the bandwidth of a network where packets are sent. In the technique, although throughput can be increased in the case where a buffer with a large capacity is used, it is difficult to keep the communication delay time of data smaller. Moreover, in the case where a buffer with a small capacity is used, although the communication delay time of data can be kept smaller, it is difficult to increase throughput.

In the technique described in Japanese Unexamined Patent Application Publication No. Hei7 (1995)-58775, the threshold of the use amount of the buffer is changed according to the loss rate of priority data in the buffer. In the case where the use amount of the buffer is the threshold or less, both of priority data and non-priority data are caused to come in the buffer, whereas in the case where the use amount of the buffer is the threshold or more, only priority data is caused to come in the buffer. In the technique, since the use amount (the capacity) of the buffer is sometimes increased even in the case where the communication rate is low, it is difficult to always keep communication delay time smaller.

Moreover, suppose the case is considered that the technique described in Japanese Unexamined Patent Application Publication No. 2005-117125 and the technique described in Japanese Unexamined Patent Application Publication No. Hei7 (1995)-58775 are combined, the rate at which packets are read out of a memory is controlled according to the bandwidth of a network where packets are sent, and the threshold of the use amount of the buffer is changed according to the loss rate. Also in this case, since the use amount of the buffer is sometimes increased in the case where the communication rate is low, it is difficult to always keep communication delay time smaller. As described above, there is a problem in that a short communication delay time is incompatible with a high throughput.

The present invention is the invention to solve the problems. It is an object to provide a remote monitoring system, a network interconnection device, and a communication control method that keep the communication delay time of data smaller, for which a shorter communication delay time is demanded, and that implement a high throughput.

In order to solve the problem, a configuration described in the appended claims, for example, is adopted.

The present application includes a plurality of schemes to solve the problems. For an example of the schemes, there is a remote monitoring system including: one or a plurality of sensor equipped communication terminals; a network interconnection device connecting to the sensor equipped communication terminal through a first network; and a monitoring center connecting to the network interconnection device through a second network. The sensor equipped communication terminal sends acquired measurement data to the network interconnection device through the first network. The network interconnection device includes: a determining unit configured to sort the received measurement data into first data necessary to be delivered to the monitoring center within requested communication delay time and second data not necessarily to be delivered to the monitoring center within requested communication delay time; a first data accumulating unit configured to accumulate the first data; a second data accumulating unit configured to accumulate the second data; and a transmission buffer configured to store the first data and the second data in sending the first data stored in the first data accumulating unit and the second data accumulated in the second data accumulating unit to the second network in a first in first out method. A rate in causing the first data stored in the first data accumulating unit and the second data accumulated in the second data accumulating unit to come in the transmission buffer is dynamically controlled.

In accordance with a first solving scheme according to the present invention, there is provided a network interconnection device in a remote monitoring system including one or a plurality of sensor equipped communication terminals, the network interconnection device configured to communicate with the sensor equipped communication terminal through a first network, and a monitoring center configured to communicate with the network interconnection device through a second network. The network interconnection device includes: a receiving unit configured to receive measurement data measured at the sensor equipped communication terminal; a determining unit configured to sort the received measurement data into first data to be sent in priority over other data and second data not necessarily to be sent in priority over other data; a first data accumulating unit configured to accumulate the first data; a second data accumulating unit configured to accumulate the second data; a transmission buffer configured to store the first data in priority in sending the first data accumulated in the first data accumulating unit and the second data accumulated in the second data accumulating unit to the second network; a transmitting unit configured to sequentially read the first data and the second data stored in the transmission buffer and send the first data and the second data to the second network; and a transmission control unit configured to dynamically control an inlet rate in causing the first data accumulated in the first data accumulating unit and the second data accumulated in the second data accumulating unit to come in the transmission buffer based on a communication rate of the second network.

In accordance with a second solving scheme according to the present invention, there is provided a remote monitoring system including: one or a plurality of sensor equipped communication terminals; a network interconnection device configured to communicate with the sensor equipped communication terminal through a first network; and a monitoring center configured to communicate with the network interconnection device through a second network. The sensor equipped communication terminal sends measured measurement data to the network interconnection device. The network interconnection device includes: a determining unit configured to sort the received measurement data into first data to be sent in priority over other data and second data not necessarily to be sent in priority over other data; a first data accumulating unit configured to accumulate the first data; a second data accumulating unit configured to accumulate the second data; a transmission buffer configured to store the first data in priority in sending the first data accumulated in the first data accumulating unit and the second data accumulated in the second data accumulating unit to the second network; a transmitting unit configured to sequentially read the first data and the second data stored in the transmission buffer and send the first data and the second data to the second network; and a transmission control unit configured to dynamically control an inlet rate in causing the first data accumulated in the first data accumulating unit and the second data accumulated in the second data accumulating unit to come in the transmission buffer based on a communication rate of the second network.

In accordance with a third solving scheme according to the present invention, there is provided a communication control method for a remote monitoring system including one or a plurality of sensor equipped communication terminals, a network interconnection device configured to communicate with the sensor equipped communication terminal through a first network, and a monitoring center configured to communicate with the network interconnection device through a second network. The communication control method causes the network interconnection device to perform: receiving measurement data measured at a sensor equipped communication terminal; sorting the received measurement data into first data to be sent in priority over other data and second data not necessarily to be sent in priority over other data; accumulating the first data and the second data; storing the first data in priority in a transmission buffer in sending the accumulated first data and the accumulated second data to the second network; sequentially reading the first data and the second data stored in the transmission buffer to send the first data and the second data to the second network; and dynamically controlling an inlet rate in causing the accumulated first data and the accumulated second data to come in the transmission buffer based on a communication rate of the second network.

According to the present invention, it is possible to provide a remote monitoring system, a network interconnection device, and a communication control method that keep the communication delay time of data smaller, for which a shorter communication delay time is demanded, and that implement a high throughput.

BRIEF DESCRIPTION OF THE INVENTION

The present invention will become fully understood from the detailed description given hereinafter and the accompanying drawings, in which:

Fig. 1 is a diagram of the overall configuration of a remote monitoring system according to an embodiment;
Fig. 2 is a block diagram of a network interconnection device according to a first embodiment;
Fig. 3 is an illustration of the correspondence between modulation methods and wide area network (WAN) communication rates according to the first embodiment;
Fig. 4 is an illustration of the correspondence between communication delay time and a WAN communication rate according to the first embodiment;
Fig. 5 is an illustration of the relationship between the use amount of a transmission buffer and communication delay time according to the first embodiment;
Fig. 6 is a flowchart of the operation of a transmission control unit according to the first embodiment;
Fig. 7 is an illustration of a priority level determining table according to the first embodiment;
Fig. 8 is a block diagram of a network interconnection device according to a second embodiment;
Fig. 9 is a block diagram of a network interconnection device according to a third embodiment; and
Fig. 10 is a block diagram of a network interconnection device according to a fourth embodiment.

DETAILED DESCRIPTION OF THE PREFERRED EMBODIMENTS

In the following, embodiments of the present invention will be described with reference to the drawings.

First Embodiment

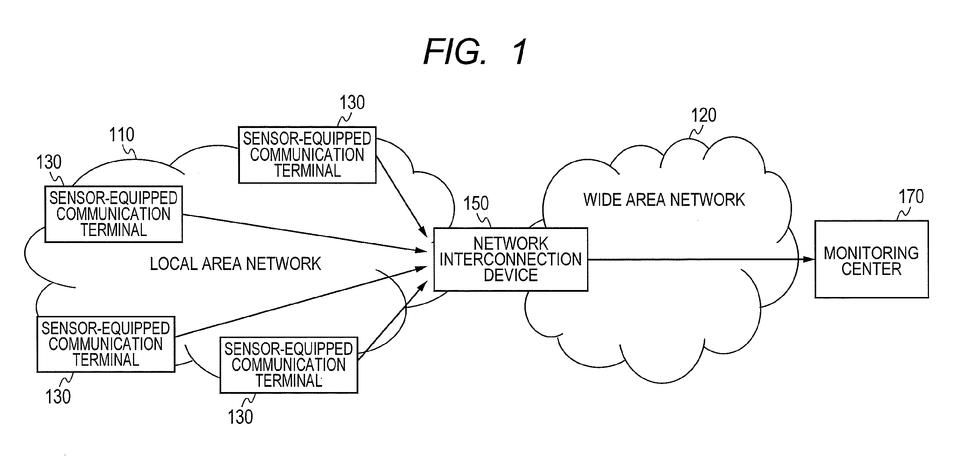

Fig. 1 is a diagram of the overall configuration of a remote monitoring system according to a first embodiment.
The remote monitoring system includes a local area network 110 and a wide area network 120, also including a network interconnection device 150 that connects the local area network 110 to the wide area network 120, one or a plurality of sensor equipped communication terminals 130 that connect to the network interconnection device (the network device) 150 through the local area network 110, and a monitoring center 170 that connects to the wide area network 120.
The local area network 110 is a PAN (Personal Area Network) using IEEE 802.15.4, for example, for the physical layer, or a LAN (Local Area Network) using IEEE 802.11 or IEEE 802.3 for the physical layer, or a cellular network, or a cabled or wireless network formed of the combination thereof.
The wide area network 120 is a LAN (Local Area Network) using IEEE 802.11 or IEEE 802.3, for example, for the physical layer, or a MAN (Metropolitan Area Network) using IEEE 802.16 for the physical layer, or a cellular network, or a cabled or wireless network formed of the combination thereof.
The sensor equipped communication terminal 130 has a sensor. The sensor equipped communication terminal 130 measures electric power, acceleration, temperature, humidity, and so on, for example, using a sensor function, and acquires the measurement data of these items. The measurement data may be appropriate data other than the examples described above. The sensor equipped communication terminal 130 sends the measurement data to the network interconnection device 150 through the local area network 110. The sensor equipped communication terminal 130 has a function to add header information such as addresses to identify data types and the sensor equipped communication terminal.

The network interconnection device 150 sends the measurement data received through the local area network 110 to the monitoring center 170 through the wide area network 120.

The monitoring center 170 receives the measurement data through the wide area network 120 and analyzes data, for example. The monitoring center 170 may have a function to measure the communication delay time of the received measurement data and send the communication delay time to the network interconnection device 150. The monitoring center 170 may have a function to control the operation of one of the network interconnection device 150 and the sensor equipped communication terminal 130 or the operations of both of the network interconnection device 150 and the sensor equipped communication terminal 130.

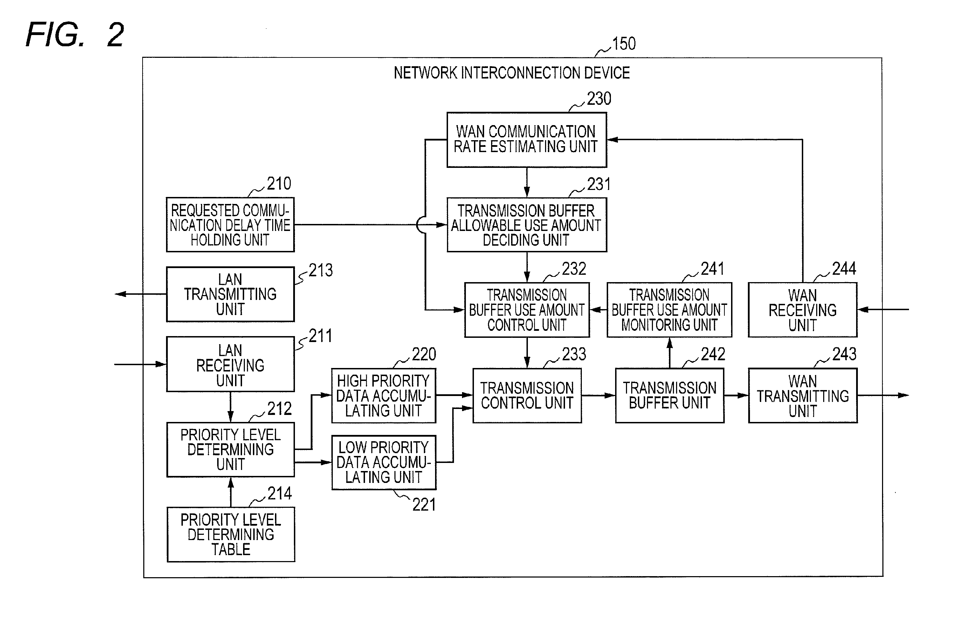

Fig. 2 is a diagram of an exemplary functional configuration of the network interconnection device 150 according to the first embodiment.

For example, the network interconnection device 150 according to the first embodiment has a requested communication delay time holding unit 210, a local area network (LAN) receiving unit 211, a priority level determining unit 212, a local area network (LAN) transmitting unit 213, a priority level determining table (a priority level determining information storage area) 214, a high priority data accumulating unit (a first data accumulating unit) 220, a low priority data accumulating unit (a second data accumulating unit) 221, a wide area network (WAN) communication rate estimating unit 230, a transmission buffer allowable use amount deciding unit 231, a transmission buffer use amount control unit 232, a transmission control unit 233, a transmission buffer use amount monitoring unit 241, a transmission buffer unit 242, a wide area network (WAN) transmitting unit 243, and a wide area network (WAN) receiving unit 244.

The LAN receiving unit 211 receives the measurement data sent by the sensor equipped communication terminal 130 through the local area network 110 illustrated in Fig. 1. The LAN transmitting unit 213 sends data to the sensor equipped communication terminal 130 connected to the local area network 110.

The priority level determining unit 212 makes reference to the header information of the measurement data inputted from the LAN receiving unit 211 and the priority level determining table 214 to determine the priority level of the measurement data. For the header information of the measurement data, there are types of items of measurement data and the source addresses of items of measurement data, for example.

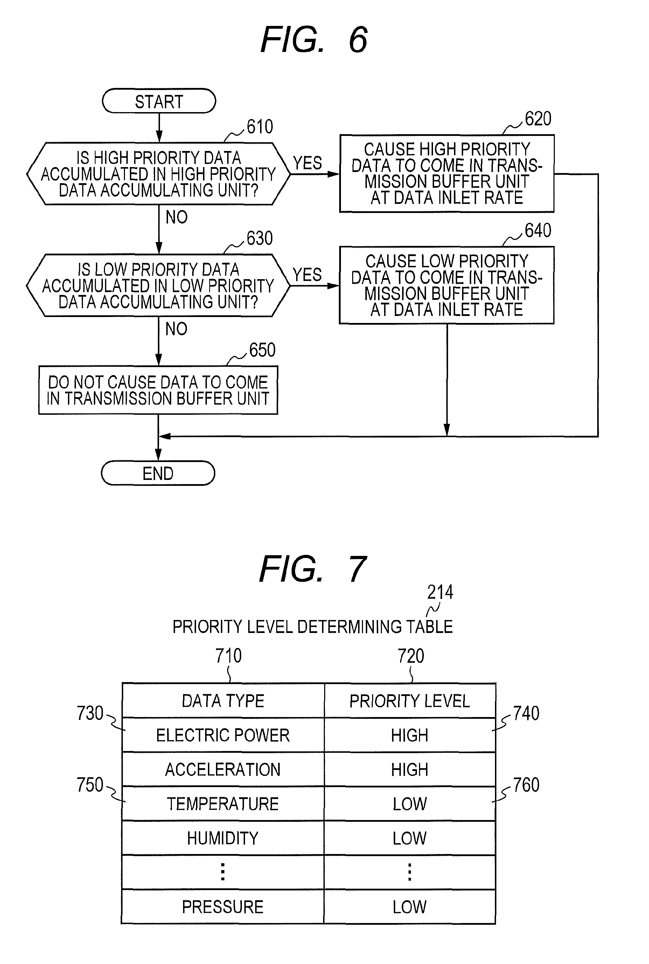

Fig. 7 illustrates an exemplary configuration of the priority level determining table 214. The priority level determining table 214 stores a data type 710 in association with a priority level 720. These items of information can be stored beforehand. For example, electric power and acceleration can be labeled as high priority data, whereas temperature, humidity, pressure, or the like can be labeled as low priority (non-priority) data. The items of data may be expressed by appropriate identifiers. It is noted that high priority data and low priority data can be appropriately determined, not limited to the examples illustrated in the drawing.

In the case of using the priority level determining table 214 illustrated in Fig. 7, the priority level determining unit 212 determines that the priority level is high priority 740 when a type of the measurement data is electric power 730 based on header information, for example, and inputs the measurement data to the high priority data accumulating unit 220. On the other hand, when a type of the measurement data is temperature 750, the priority level determining unit 212 determines that the priority level is low priority 760, and inputs the measurement data to the low priority data accumulating unit 221. In the following description, measurement data inputted to the high priority data accumulating unit 220 is referred to as high priority data (first data), and measurement data inputted to the low priority data accumulating unit 221 is referred to as low priority data (second data). The high priority data is data that is necessary to suppress communication delay time in delivering the data to the monitoring center 170 at a certain value or less, and data that is sent in priority over other data. The low priority data is data that is not restricted in communication delay time in delivering the data to the monitoring center, and data that is not necessarily sent in priority over other data.

The requested communication delay time holding unit 210 holds the upper limit of communication delay time in delivering high priority data to the monitoring center 170 (in the following, referred to as requested communication delay time). The requested communication delay time held at the requested communication delay time holding unit 210 may be dynamically changed according to an instruction or the like from the monitoring center 170.

The high priority data accumulating unit 220 accumulates high priority data inputted from the priority level determining unit 212. The low priority data accumulating unit 221 accumulates low priority data inputted from the priority level determining unit 212. The transmission buffer unit 242 is a queue that accumulates the high priority data and the low priority data inputted from the transmission control unit 233. For a data input/output method for the transmission buffer unit 242, FIFO (First In, First Out) is used. The WAN transmitting unit 243 reads data out of the transmission buffer unit 242 at a rate equal to a WAN communication rate, and sends the data to the wide area network 120.

The WAN receiving unit 244 receives data coming from the wide area network 120. The transmission buffer use amount monitoring unit 241 monitors a data volume accumulated in the transmission buffer unit 242, and notifies the transmission buffer use amount control unit 232 of the data volume.

The WAN communication rate estimating unit 230 estimates the present WAN communication rate from information (in the following, referred to as communication rate estimation base information) used in estimating the WAN communication rate inputted from the WAN receiving unit 244, and notifies the transmission buffer allowable use amount deciding unit 231 and the transmission buffer use amount control unit 232 of the estimated result. Types of items of the communication rate estimation base information are not restricted as long as the communication rate estimation base information is information having the correlation with the WAN communication rate.

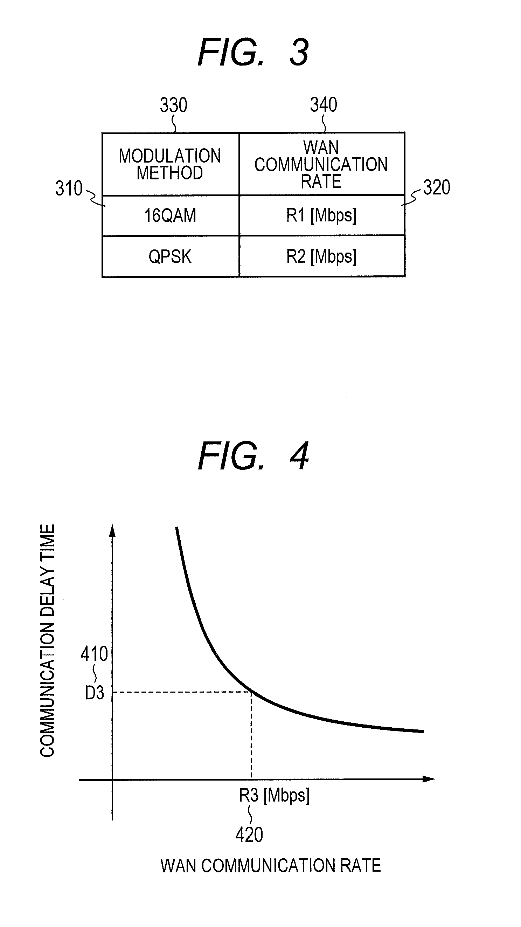

For example, in the case where the wide area network 120 is a cellular network, the communication rate estimation base information may be information in a modulation method or the like that a cellular base station notifies the network interconnection device 150 through the WAN receiving unit 244. In this case, the WAN communication rate estimating unit 230 estimates a WAN communication rate from the relationship between a modulation method 330 and a WAN communication rate 340 illustrated in Fig. 3. This relationship can be stored beforehand in the WAN communication rate estimating unit 230. For example, in the case where a modulation method is 16-QAM (310), the WAN communication rate estimating unit 230 estimates that a WAN communication rate is at R1 (320). It is noted that although the communication rate of the wide area network sometimes fluctuates depending on a radio wave environment, typical values can be used in this embodiment.

Moreover, in another embodiment, the communication rate estimation base information may be communication delay time in delivering the measurement data sent from the sensor equipped communication terminal 130 to the monitoring center 170. Generally, the communication rate of the network is inversely proportional to the communication delay time. Thus, the WAN communication rate estimating unit 230 can estimate a WAN communication rate from communication delay time notified from the monitoring center 170 through the wide area network 120. Fig. 4 illustrates an exemplary relationship between communication delay time and a WAN communication rate. For example, in the case where the notified communication delay time is D3 (410), the WAN communication rate estimating unit 241 estimates that the WAN communication rate is at R3 Mbps (420). It is noted that the relationship between the communication rate of the network and the communication delay time illustrated in Fig. 4 can be stored beforehand in the WAN communication rate estimating unit 230 in an appropriate form. For example, a relational expression may be stored, or the communication rate of the network and the communication delay time may be stored in a table form in which the communication rate of the network corresponds to the communication delay time.

The transmission buffer allowable use amount deciding unit 231 decides a transmission buffer allowable use amount from the requested communication delay time held at the requested communication delay time holding unit 210 and the present WAN communication rate notified from the WAN communication rate estimating unit 230. The transmission buffer allowable use amount deciding unit 231 notifies the transmission buffer use amount control unit 232 of the decided transmission buffer allowable use amount.

In the following, a decision method for the transmission buffer allowable use amount will be described. The communication delay time of data newly coming in the transmission buffer unit 242 (here, mainly the delay time at the transmission buffer) is expressed by Expression (1) below using a transmission buffer use amount expressing the use amount of the transmission buffer unit 242 and a WAN communication rate:

$$\text{communication delay time = transmission buffer use amount/WAN communication rate} \qquad (1).$$

In Expression (1), in order to make communication delay time equal to requested communication delay time or less, it is necessary to satisfy the relationship of Expression (2) below:

$$\text{requested communication delay time} \geq \text{transmission buffer use amount/WAN communication rate} \qquad (2).$$

The transmission buffer allowable use amount is the maximum value of the transmission buffer use amount satisfying the relationship of Expression (2), and given by the subsequent expression:

$$\text{transmission buffer allowable use amount} = \text{requested}$$

$$\text{communication delay time} \times \text{WAN communication rate (3).}$$

It is noted that since communication delay possibly occurs in the units other than the transmission buffer, the transmission buffer allowable use amount may be determined in consideration of the occurrence of communication delay in the other units.

The transmission buffer allowable use amount deciding unit 231 substitutes the requested communication delay time held at the requested communication delay time holding unit 210 and the present WAN communication rate notified from the WAN communication rate estimating unit 230 in Expression (3) to decide a transmission buffer allowable use amount.

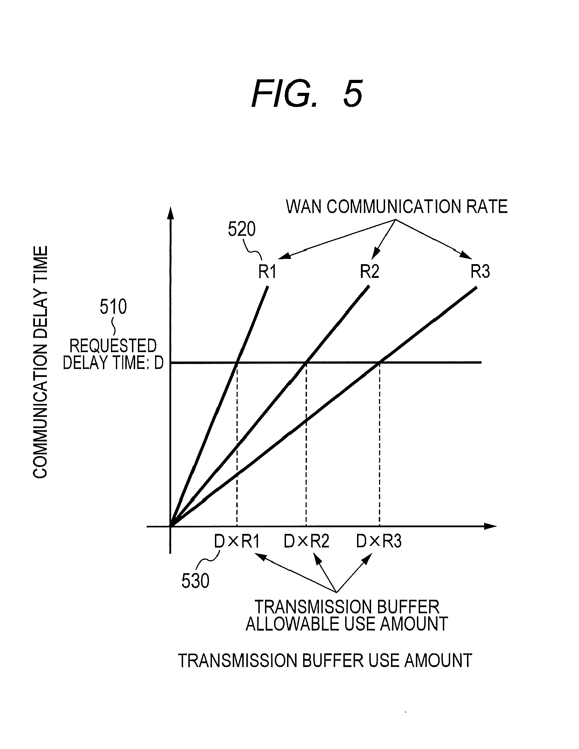

Fig. 5 is a graph of the relationship in Expression (3). For example, in the case where the requested delay time is D (510) and the WAN communication rate is R1 (520), the transmission buffer allowable use amount deciding unit 231 decides the transmission buffer allowable use amount as D × R1 (530), where R1 < R2 < R3 in the drawing.

The transmission buffer use amount control unit 232 decides a data inlet rate to the transmission buffer unit 242 from the transmission buffer allowable use amount notified from the transmission buffer allowable use amount deciding unit 231, the WAN communication rate notified from the WAN communication rate estimating unit 230, and the transmission buffer use amount notified from the transmission buffer use amount monitoring unit 241, and then notifies the transmission control unit 233 of the data inlet rate. The transmission buffer use amount control unit 232 decides the data inlet rate in such a way that the use amount of the transmission buffer unit does not exceed the transmission buffer allowable use amount. For example, in the case where the use amount of the buffer exceeds the buffer allowable use amount, the transmission buffer use amount control unit 232 decides the data inlet rate at zero. For example, in the case where the use amount of the buffer is below the buffer allowable use amount, the transmission buffer use amount control unit 232 decides the data inlet rate at a value equal to the WAN communication rate. It is noted that the value may be a vale based on the WAN communication rate, other than deciding a value equal to the WAN communication rate. Moreover, in the case where a difference between the use amount of the buffer and the buffer allowable use amount exceeds a predetermined amount before the use amount of the buffer exceeds the buffer allowable use amount, the data inlet rate may be a value larger than zero and smaller than WAN communication rate. Furthermore, the data inlet rate may be found by an appropriate method from the transmission buffer allowable use amount, the WAN communication rate, and the transmission buffer use amount, in addition to this.

The transmission control unit 233 fetches data from the high priority data accumulating unit 220 and the low priority data accumulating unit 221, and causes the data to come in the transmission buffer unit 242 at the data inlet rate notified from the transmission buffer use amount control unit 232.

Fig. 6 illustrates an exemplary operation flow of the transmission control unit 233. The transmission control unit 233 confirms whether there is high priority data accumulated in the high priority data accumulating unit 220 (610). In the case where there is high priority data accumulated in the high priority data accumulating unit 220, the transmission control unit 233 fetches high priority data from the high priority data accumulating unit 220, and causes the high priority data to come in the transmission buffer unit 242 at the data inlet rate notified from the transmission buffer use amount control unit 232 (620). In the case where there is no high priority data accumulated in the high priority data accumulating unit 220, the transmission control unit 233 confirms whether there is low priority data accumulated in the low priority data accumulating unit 221 (630). In the case where low priority data is accumulated in the low priority data accumulating unit 221, the transmission control unit 233 fetches low priority data from the low priority data accumulating unit 221, and causes the low priority data to come in the transmission buffer unit 242 at the data inlet rate notified from the transmission buffer use amount control unit 232 (640). In the case where there is no low priority data accumulated in the low priority data accumulating unit 221, the transmission control unit 233 does not cause data to come in the transmission buffer unit 243 (650).

According to this embodiment, it is possible to suppress the communication delay time of the high priority data to the requested communication delay time or less, and it is possible to increase throughput, which is a data volume per unit time to be sent to the wide area network 120. Moreover, also in the case where such a network is applied to a remote monitoring system in which fluctuations in the communication rate are great as in a wireless network or the like, it is possible to keep the communication delay time of data smaller, for which a shorter communication delay time is demanded, and it is possible to implement a high throughput.

For example, the allowable use amount of the transmission buffer unit 243 and/or the data inlet rate to the transmission buffer unit 243 is made smaller as the communication rate of the wide area network 120 is reduced, and the high priority data is caused to come in the transmission buffer unit 243 in priority. Thus, it is possible to reduce an amount of low priority data remaining in the transmission buffer unit 243 in association with a reduction in the communication rate of the wide area network 120, and it is possible to shorten the delay of high priority data stored in the transmission buffer unit 243 subsequent to the low priority data.

Second Embodiment

In the first embodiment, an example is illustrated in which measurement data is sorted into high priority data and low priority data according to the priority level of the measurement data. Measurement data may be sorted into three groups or more according to priority levels.

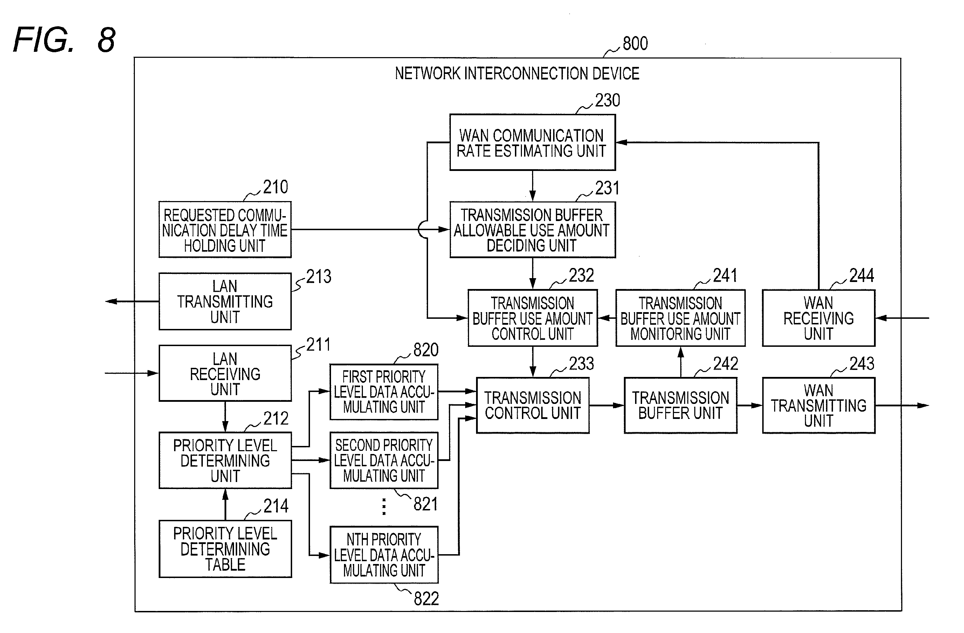

Fig. 8 illustrates a network interconnection device 800 according to this embodiment. In Fig. 8, portions corresponding to the units illustrated in Fig. 2 are designated the same reference numerals and signs. It is noted that the overall configuration of a remote monitoring system is the same as in the first embodiment (in Fig. 1, for example).

A priority level determining unit 212 of the network interconnection device 800 illustrated in Fig. 8 sorts measurement data at N priority levels (N is an integer of three or more), and inputs data to accumulating units according to the priority levels. Although the configuration of a priority level determining table 214 is the same as in the first embodiment, the priority levels to be stored are different. In this embodiment, priority levels sorted into N levels (N is an integer of three or more) are stored in a priority level 720. As similar to the first embodiment, the priority level determining unit 212 makes reference to the priority level determining table 214 to determine the priority level of received data. A first priority level data accumulating unit 820 accumulates measurement data at the highest priority level. A second priority level data accumulating unit 821 accumulates measurement data at the second highest priority level. An Nth priority level data accumulating unit 822 accumulates measurement data at the lowest priority level. As similar to the first embodiment, such a configuration may be possible in which a transmission control unit 233 sequentially fetches data out of the data accumulating unit from data at a higher priority level, outputs the data to the transmission buffer unit 242 until data accumulated in the data accumulating unit is not left, and then fetches data accumulated in the data accumulating unit at the subsequent priority level. Moreover, the transmission control unit 233 may fetch data in a volume according to weights assigned to priority levels out of the data accumulating unit.

In this embodiment, it is possible to make the communication delay time of data at the highest priority level (corresponding to the first data) within requested communication delay time. In addition to this, it is possible to make communication delay time shorter as data is at the higher priority level, on data (the second data to the Nth data) other than data at the highest priority level.

Third Embodiment

The network interconnection device 150 illustrated in Fig. 2 may be configured of two physical units or more.

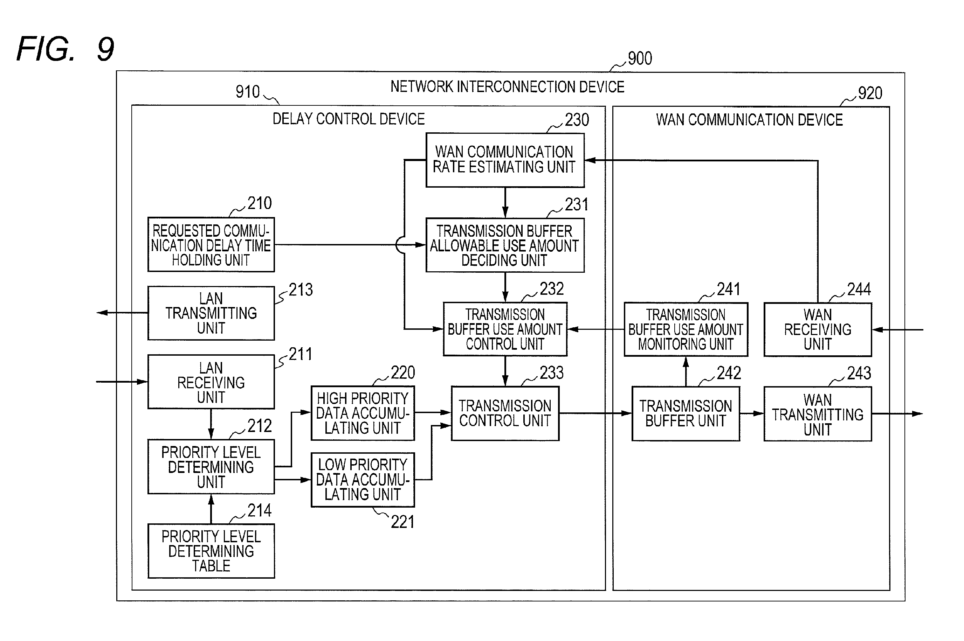

Fig. 9 illustrates the configuration of a network interconnection device 900 according to this embodiment. In Fig. 9, portions corresponding to the units illustrated in Fig. 2 are designated the same reference numerals and signs. It is noted that the overall configuration of a remote monitoring system is the same as in the first embodiment (in Fig. 1, for example). The network interconnection device 900 according to this embodiment can be configured of two devices, a delay control device 910 and a wide area network (WAN) communication device 920. For example, such a configuration may be possible in which the WAN communication device 920 corresponds to a router and the delay control device 910 is formed of a terminal processing device such as a PC.

Fourth Embodiment

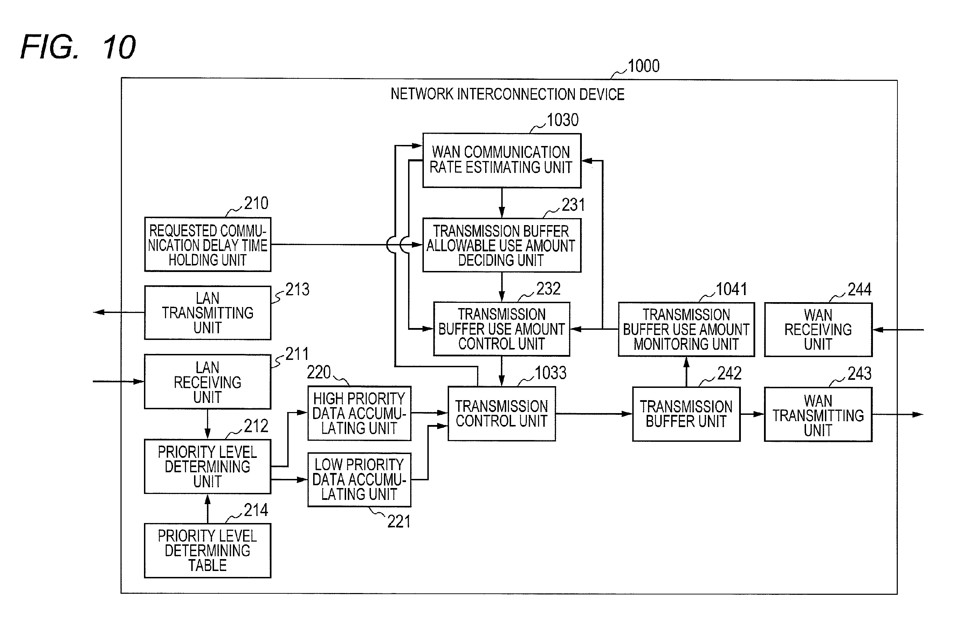

Fig. 10 illustrates the configuration of a network interconnection device 1000 according to this embodiment. In Fig. 10, portions corresponding to the units illustrated in Fig. 2 are designated the same reference numerals and signs. It is noted that the overall configuration of a remote monitoring system is the same as in the first embodiment (in Fig. 1, for example).

A WAN communication rate estimating unit 1030 according to this embodiment estimates a WAN communication rate from the increase rate of a data volume accumulated in a transmission buffer unit 242 (in the following, referred to as a transmission buffer use amount increase rate) and a rate at which a transmission control unit 1033 causes data to come in the transmission buffer unit 242 (in the following, referred to as a data inlet rate).

The WAN communication rate, the data inlet rate, and the use amount of a buffer have the following relationship.

1. In the case where the WAN communication rate is equal to the data inlet rate, the transmission buffer use amount is made constant.

2. In the case where the WAN communication rate is larger than the data inlet rate, the transmission buffer use amount is reduced at a rate (WAN communication rate - data inlet rate).

3. In the case where the WAN communication rate is smaller than the data inlet rate, the transmission buffer use amount is increased at a rate (data inlet rate - WAN communication rate).

From the relationships described above, the WAN communication rate is expressed by the following expression using the increase rate of the use amount of the buffer and the data inlet rate:

$$\text{WAN communication rate} = \text{data inlet rate} - \text{transmission buffer use amount increase rate} \qquad (4).$$

The WAN communication rate estimating unit 1030 according to this embodiment estimates the WAN communication rate using Expression (4). The WAN communication rate estimating unit 1030 finds the transmission buffer use amount increase rate in Expression (4) from the use amount of the buffer notified from a transmission buffer use amount monitoring unit 1041. The WAN communication rate estimating unit 1030 is notified of the data inlet rate in Expression (4) from the transmission control unit 1033.

According to this embodiment, it is possible that the network interconnection device 1000 estimates a WAN communication rate even in the case where the network interconnection device 1000 does not receive information having correlation with the communication rate of a wide area network.

The present invention is usable for a remote monitoring system, for example.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A network interconnection device in a remote monitoring system including one or a plurality of sensor equipped communication terminals (130), the network interconnection device (150) configured to communicate with the sensor equipped communication terminal (130) through a first network, and a monitoring center (170) configured to communicate with the network interconnection device (150) through a second network, the network interconnection device (150) comprising:

   a receiving unit (211) configured to receive measurement data measured at the sensor equipped communication terminal (130);
   a determining unit (212) configured to sort the received measurement data into first data to be sent in priority over other data and second data not necessarily to be sent in priority over other data;
   a first data accumulating unit (220) configured to accumulate the first data;
   a second data accumulating unit (221) configured to accumulate the second data;
   a transmission buffer (242) configured to store the first data in priority in sending the first data accumulated in the first data accumulating unit (220) and the second data accumulated in the second data accumulating unit (221) to the second network;
   a transmitting unit (243) configured to sequentially read the first data and the second data stored in the transmission buffer (242) and send the first data and the second data to the second network; and
   a transmission control unit (233) configured to dynamically control an inlet rate in causing the first data accumulated in the first data accumulating unit (220) and the second data accumulated in the second data accumulating unit (221) to come in the transmission buffer (242) based on a communication rate of the second network.

2. The network interconnection device according to claim 1, further comprising:

   an allowable use amount deciding unit (231) configured to dynamically change an allowable use amount expressing a maximum use amount value of the transmission buffer (242) based on the communication rate of the second network.

3. The network interconnection device according to claim 2,
   wherein the allowable use amount deciding unit (231) finds an allowable use amount expressing a maximum use amount value of the transmission buffer (242) based on the communication rate of the second network and requested communication delay time in delivering the first data to the monitoring center (170).

4. The network interconnection device according to at least one of claims 1 to 3, further comprising:

a transmission buffer use amount monitoring unit (241) configured to monitor a use amount of the transmission buffer (242); and

a transmission buffer use amount control unit (232) configured to decide an inlet rate of data coming in the transmission buffer (242) from the first data accumulating unit (220) and the second data accumulating unit (221) based on the use amount of the transmission buffer (242), an allowable use amount of the transmission buffer (242), and the communication rate of the second network.

5. The network interconnection device according to claim 4,
wherein the transmission buffer use amount control unit (232) decides the inlet rate of data so that the use amount of the transmission buffer (242) does not exceed the allowable use amount of the transmission buffer (242).

6. The network interconnection device according to at least one of claims 4 or 5, wherein:

when the use amount of the transmission buffer (242) exceeds the allowable use amount of the transmission buffer (242), the transmission buffer use amount control unit (232) makes the inlet rate of data zero; and
when the use amount of the transmission buffer (242) is below the allowable use amount of the transmission buffer (242), the transmission buffer use amount control unit (232) makes the inlet rate of data at a value equal to the communication rate of the second network or a value based on the communication rate of the second network.

7. The network interconnection device according to at least one of claims 1 to 6,
wherein the allowable use amount of the transmission buffer (242) and/or the inlet rate is reduced as the communication rate of the second network is reduced, and the first data is caused to come in the transmission buffer (242) in priority to reduce a volume of second data remaining in the transmission buffer (242) in association with a reduction in the communication rate of the second network for shortening a delay of first data to be stored in the transmission buffer (242) subsequent to the second data.

8. The network interconnection device according to at least one of claims 1 to 7, further comprising:

a communication rate estimating unit (230) configured to estimate the communication rate of the second network from information received through the second network and having a correlation with the communication rate of the second network.

9. The network interconnection device according to claim 8, wherein:

the second network is a cellular network; and
the communication rate estimating unit (230) estimates a communication rate of a corresponding second network based on information expressing a modulation method notified from a base station of the cellular network.

10. The network interconnection device according to claim 8, wherein:

the communication rate estimating unit (230) receives, from the monitoring center (170) through the second network, communication delay time measured at the monitoring center (170) according to data sent to the monitoring center (170) through the second network; and
the communication rate estimating unit (230) estimates the communication rate of the second network based on the received communication delay time.

11. The network interconnection device according to at least one of claims 1 to 7,
wherein the communication rate estimating unit (230) estimates the communication rate of the second network based on a time variation in a use amount of the transmission buffer (242) and a rate of data coming in the transmission buffer (242).

12. The network interconnection device according to claim 1, wherein:

the determining unit (212) sorts the measurement data into first data to Nth (N is an integer of three or more) data; and
the determining unit (212) accumulates the sorted first data to Nth data in a first data accumulating unit (820) to Nth data accumulating unit (822).

**13.** The network interconnection device according to at least one of claims 1 to 12,
wherein the network interconnection device (150; 800; 900; 1000) is mounted as two physical devices or more.

**14.** A remote monitoring system comprising:

one or a plurality of sensor equipped communication terminals (130);
a network interconnection device (150) configured to communicate with the sensor equipped communication terminal (130) through a first network; and
a monitoring center (170) configured to communicate with the network interconnection device (150) through a second network, wherein:

the sensor equipped communication terminal (130) sends measured measurement data to the network interconnection device (150); and
the network interconnection device (150) includes:

a determining unit (212) configured to sort the received measurement data into first data to be sent in priority over other data and second data not necessarily to be sent in priority over other data;
a first data accumulating unit (220) configured to accumulate the first data;
a second data accumulating unit (221) configured to accumulate the second data;
a transmission buffer (242) configured to store the first data in priority in sending the first data accumulated in the first data accumulating unit (220) and the second data accumulated in the second data accumulating unit (221) to the second network;
a transmitting unit (243) configured to sequentially read the first data and the second data stored in the transmission buffer (242) and send the first data and the second data to the second network; and
a transmission control unit (233) configured to dynamically control an inlet rate in causing the first data accumulated in the first data accumulating unit (220) and the second data accumulated in the second data accumulating unit (221) to come in the transmission buffer (242) based on a communication rate of the second network.

**15.** A communication control method for a remote monitoring system including one or a plurality of sensor equipped communication terminals (130), a network interconnection device (150) configured to communicate with the sensor equipped communication terminal (130) through a first network, and a monitoring center (170) configured to communicate with the network interconnection device (150) through a second network, the communication control method causing the network interconnection device (150) to perform:

receiving measurement data measured at a sensor equipped communication terminal (130);
sorting the received measurement data into first data to be sent in priority over other data and second data not necessarily to be sent in priority over other data;
accumulating the first data and the second data;
storing the first data in priority in a transmission buffer (242) in sending the accumulated first data and the accumulated second data to the second network;
sequentially reading the first data and the second data stored in the transmission buffer (242) to send the first data and the second data to the second network; and
dynamically controlling an inlet rate in causing the accumulated first data and the accumulated second data to come in the transmission buffer (242) based on a communication rate of the second network.

## FIG. 1

130

SENSOR-EQUIPPED
COMMUNICATION
TERMINAL

110

130

SENSOR-EQUIPPED
COMMUNICATION
TERMINAL

LOCAL AREA NETWORK

SENSOR-EQUIPPED
COMMUNICATION
TERMINAL

130

SENSOR-EQUIPPED
COMMUNICATION
TERMINAL

130

150

NETWORK
INTERCONNECTION
DEVICE

120

WIDE AREA NETWORK

170

MONITORING
CENTER

# FIG. 2

NETWORK INTERCONNECTION DEVICE ~150

- WAN COMMUNICATION RATE ESTIMATING UNIT ~230
- REQUESTED COMMUNICATION DELAY TIME HOLDING UNIT ~210
- TRANSMISSION BUFFER ALLOWABLE USE AMOUNT DECIDING UNIT ~231
- LAN TRANSMITTING UNIT ~213
- TRANSMISSION BUFFER USE AMOUNT CONTROL UNIT ~232
- TRANSMISSION BUFFER USE AMOUNT MONITORING UNIT ~241
- WAN RECEIVING UNIT ~244
- LAN RECEIVING UNIT ~211
- HIGH PRIORITY DATA ACCUMULATING UNIT ~220
- TRANSMISSION CONTROL UNIT ~233
- TRANSMISSION BUFFER UNIT ~242
- WAN TRANSMITTING UNIT ~243
- PRIORITY LEVEL DETERMINING UNIT ~212
- LOW PRIORITY DATA ACCUMULATING UNIT ~221
- PRIORITY LEVEL DETERMINING TABLE ~214

EP 2 571 198 A1

## FIG. 3

| MODULATION METHOD | WAN COMMUNICATION RATE |
|---|---|
| 16QAM | R1 [Mbps] |
| QPSK | R2 [Mbps] |

330 340

310 320

## FIG. 4

COMMUNICATION DELAY TIME

410
D3

R3 [Mbps]
420

WAN COMMUNICATION RATE

# FIG. 5

COMMUNICATION DELAY TIME

WAN COMMUNICATION RATE

520

R1      R2      R3

510

REQUESTED DELAY TIME: D

$D \times R1$    $D \times R2$    $D \times R3$

530

TRANSMISSION BUFFER ALLOWABLE USE AMOUNT

TRANSMISSION BUFFER USE AMOUNT

# *FIG.* 6

START

IS HIGH PRIORITY DATA
ACCUMULATED IN HIGH PRIORITY
DATA ACCUMULATING UNIT? — 610

YES → CAUSE HIGH PRIORITY
DATA TO COME IN TRANS-
MISSION BUFFER UNIT
AT DATA INLET RATE — 620

NO

IS LOW PRIORITY DATA
ACCUMULATED IN LOW PRIORITY
DATA ACCUMULATING UNIT? — 630

YES → CAUSE LOW PRIORITY
DATA TO COME IN TRANS-
MISSION BUFFER UNIT
AT DATA INLET RATE — 640

NO

DO NOT CAUSE DATA TO COME
IN TRANSMISSION BUFFER UNIT — 650

END

# *FIG.* 7

214

PRIORITY LEVEL DETERMINING TABLE

| 710 | 720 |
|---|---|
| DATA TYPE | PRIORITY LEVEL |
| ELECTRIC POWER | HIGH |
| ACCELERATION | HIGH |
| TEMPERATURE | LOW |
| HUMIDITY | LOW |
| ⋮ | ⋮ |
| PRESSURE | LOW |

730 740 750 760

## FIG. 8

**NETWORK INTERCONNECTION DEVICE 800**

- WAN RECEIVING UNIT (244)
- WAN TRANSMITTING UNIT (243)
- WAN COMMUNICATION RATE ESTIMATING UNIT (230)
- TRANSMISSION BUFFER ALLOWABLE USE AMOUNT DECIDING UNIT (231)
- TRANSMISSION BUFFER USE AMOUNT CONTROL UNIT (232)
- TRANSMISSION CONTROL UNIT (233)
- TRANSMISSION BUFFER USE AMOUNT MONITORING UNIT (241)
- TRANSMISSION BUFFER UNIT (242)
- FIRST PRIORITY LEVEL DATA ACCUMULATING UNIT (820)
- SECOND PRIORITY LEVEL DATA ACCUMULATING UNIT (821)
- NTH PRIORITY LEVEL DATA ACCUMULATING UNIT (822)
- REQUESTED COMMUNICATION DELAY TIME HOLDING UNIT (210)
- LAN TRANSMITTING UNIT (213)
- LAN RECEIVING UNIT (211)
- PRIORITY LEVEL DETERMINING UNIT (212)
- PRIORITY LEVEL DETERMINING TABLE (214)

FIG. 9

NETWORK INTERCONNECTION DEVICE — 900

DELAY CONTROL DEVICE — 910

WAN COMMUNICATION DEVICE — 920

- WAN COMMUNICATION RATE ESTIMATING UNIT — 230
- REQUESTED COMMUNICATION DELAY TIME HOLDING UNIT — 210
- TRANSMISSION BUFFER ALLOWABLE USE AMOUNT DECIDING UNIT — 231
- LAN TRANSMITTING UNIT — 213
- TRANSMISSION BUFFER USE AMOUNT CONTROL UNIT — 232
- TRANSMISSION BUFFER USE AMOUNT MONITORING UNIT — 241
- WAN RECEIVING UNIT — 244
- LAN RECEIVING UNIT — 211
- HIGH PRIORITY DATA ACCUMULATING UNIT — 220
- TRANSMISSION CONTROL UNIT — 233
- TRANSMISSION BUFFER UNIT — 242
- WAN TRANSMITTING UNIT — 243
- PRIORITY LEVEL DETERMINING UNIT — 212
- LOW PRIORITY DATA ACCUMULATING UNIT — 221
- PRIORITY LEVEL DETERMINING TABLE — 214

EP 2 571 198 A1

## FIG. 10

NETWORK INTERCONNECTION DEVICE ~1000

WAN COMMUNICATION RATE ESTIMATING UNIT ~1030

REQUESTED COMMUNICATION DELAY TIME HOLDING UNIT ~210

TRANSMISSION BUFFER ALLOWABLE USE AMOUNT DECIDING UNIT ~231

TRANSMISSION BUFFER USE AMOUNT CONTROL UNIT ~232

TRANSMISSION BUFFER USE AMOUNT MONITORING UNIT ~1041

WAN RECEIVING UNIT ~244

LAN TRANSMITTING UNIT ~213

LAN RECEIVING UNIT ~211

HIGH PRIORITY DATA ACCUMULATING UNIT ~220

TRANSMISSION CONTROL UNIT ~1033

TRANSMISSION BUFFER UNIT ~242

WAN TRANSMITTING UNIT ~243

PRIORITY LEVEL DETERMINING UNIT ~212

LOW PRIORITY DATA ACCUMULATING UNIT ~221

PRIORITY LEVEL DETERMINING TABLE ~214

EP 2 571 198 A1

Europäisches
Patentamt
European
Patent Office
Office européen
des brevets

**EUROPEAN SEARCH REPORT**

Application Number

EP 12 17 6148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 348 675 A1 (HITACHI LTD [JP]) 27 July 2011 (2011-07-27) * paragraphs [0005], [0008], [0009], [0012] - [0050]; claims * ----- | 1-15 | INV. H04L12/26 |
| Y | WO 2008/049425 A1 (MEDIANET INNOVATIONS AS [DK]; SINDELARU CATALIN [RO]; TOCAN FRANCO [RO] 2 May 2008 (2008-05-02) * page 2, line 12 - line 26 * * page 4, line 10 - page 5, line 23 * * claims * ----- | 1-15 | |
| Y | JP 2005 354738 A (HITACHI LTD) 22 December 2005 (2005-12-22) * paragraphs [0006], [0007], [0020] - [0023]; claims * ----- | 1-15 | |
| Y,D | JP 7 058775 A (TOSHIBA CORP) 3 March 1995 (1995-03-03) * paragraphs [0009] - [0019] * ----- | 1-15 | |
| Y,D | JP 2005 117125 A (OI ELECTRIC CO LTD) 28 April 2005 (2005-04-28) * the whole document * ----- | 1-15 | TECHNICAL FIELDS SEARCHED (IPC) H04L |

The present search report has been drawn up for all claims

| Place of search | Date of completion of the search | Examiner |
|---|---|---|
| Munich | 28 January 2013 | Ceccarini, Giulio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 17 6148

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | | Publication date | Patent family member(s) | | Publication date |
|---|---|---|---|---|---|
| EP 2348675 | A1 | 27-07-2011 | CN | 102137097 A | 27-07-2011 |
| | | | EP | 2348675 A1 | 27-07-2011 |
| | | | JP | 2011155344 A | 11-08-2011 |
| | | | US | 2011182196 A1 | 28-07-2011 |
| WO 2008049425 | A1 | 02-05-2008 | EP | 2084864 A1 | 05-08-2009 |
| | | | US | 2010005178 A1 | 07-01-2010 |
| | | | WO | 2008049425 A1 | 02-05-2008 |
| | | | WO | 2008049434 A1 | 02-05-2008 |
| JP 2005354738 | A | 22-12-2005 | JP | 4135007 B2 | 20-08-2008 |
| | | | JP | 2005354738 A | 22-12-2005 |
| JP 7058775 | A | 03-03-1995 | NONE | | |
| JP 2005117125 | A | 28-04-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005117125 A

- JP HEI7199558775 B